Europäisches Patentamt

European Patent Office

Office européen des brevets

(11) Numéro de publication : **0 350 110 B1**

## (12) FASCICULE DE BREVET EUROPEEN

(45) Date de publication du fascicule du brevet :
**10.03.93 Bulletin 93/10**

(51) Int. Cl.$^5$ : **G02B 6/12**, G02B 6/34

(21) Numéro de dépôt : **89201726.0**

(22) Date de dépôt : **29.06.89**

(54) **Dispositif semiconducteur optoélectronique intégré incluant un séparateur des polarisations TE/TM.**

(30) Priorité : **05.07.88 FR 8809084**

(43) Date de publication de la demande :
**10.01.90 Bulletin 90/02**

(45) Mention de la délivrance du brevet :
**10.03.93 Bulletin 93/10**

(84) Etats contractants désignés :
**DE FR GB NL**

(56) Documents cités :
**US-A- 4 669 815**
**APPLIED PHYSICS LETTERS, vol. 36, no. 7,**
**avril 1980, pages 491-493, American Institute**
**of Physics, New York, US; O. MIKAMI:**
**"LiNbO3 coupled-waveguided TE/TM mode**
**splitter"**

(56) Documents cités :
**PATENT ABSTRACTS OF JAPAN, vol. 11, no.**
**197 (P-289)[2644], 25 juin 1987, page 19 P 589 &**
**JP-A-62 19 810 (NIPPON TELEGR. & TELEPH.**
**CORP.) 28-01-1987**
**ELECTRONICS LETTERS, vol. 16, no. 20, 25**
**septembre 1980, pages 762-763; W. EICK-**
**HOFF: "In-line fibre-optic polariser"**
**IEEE COMMUNICATIONS, vol. 25, no. 5, mai**
**1987, pages 16-26, IEEE, New York, NY, US;**
**H.S. HINTON: "Photonic switching using**
**directional couplers"**

(73) Titulaire : **ALCATEL ALSTHOM RECHERCHE**
**Société Anonyme**
**Route de Nozay**
**91460 Marcoussis (FR)**

(72) Inventeur : **Gamonal, Rémi Société Civile**
**S.P.I.D.**
**209, rue de l'Université**
**F-75007 Paris (FR)**

(74) Mandataire : **Dalsace, Michel et al**
**c/o Sospi 14-16, rue de la Baume**
**F-75008 Paris (FR)**

## Description

L'invention concerne un dispositif semiconducteur optoélectronique intégré incluant un séparateur des polarisations TE/TM, ce séparateur comprenant deux guides de lumière parallèles et monomodes, dont l'un reçoit à l'entrée un signal lumineux, et comprenant des moyens pour effectuer la séparation de ce signal en ses deux composantes TE et TM, dont l'une TE est transportée en sortie par l'un des guides et l'autre TM est transportée en sortie par l'autre guide.

L'invention trouve, entre autres, son application dans la réalisation de dispositifs destinés à la détection homodyne ou hétérodyne.

Notamment, la détection homodyne a pour but le mélange d'un signal au signal d'un oscillateur local de fréquence donnée pour en extraire la fréquence intermédiaire. A cet effet, il est indispensable de disposer à la fois de la composante TE (transverse électrique) et de la composante TM (transverse magnétique) du signal. En effet, dans la détection homodyne, on est amené à mesurer l'intensité du champ résultant qui s'exprime par le carré de la somme du champ du signal et du champ de l'oscillateur local. Dans l'expression de l'intensité du champ résultant, intervient le produit scalaire du champ du signal et du champ de l'oscillateur local. On voit que lorsque le vecteur champ électrique du signal est orthogonal au vecteur champ électrique de l'oscillateur local, il ne peut y avoir détection, car l'information est contenue dans le produit scalaire. Ceci explique qu'il est nécessaire de décomposer aussi bien le signal à traiter que le signal de l'oscillateur local en leurs deux composantes TE et TM, car dans ces conditions, on se trouve toujours dans le cas où au moins un des deux produits scalaires que l'on effectue alors, est non nul.

Un dispositif séparateur des polarisations TE/TM est connu de l'état de la technique par la publication intitulée "LiNbO$_3$ coupled-waveguided TE/TM code Splitter" par OSAMU MIKAMI dans "Appl.Phys.Lett.36 (7), 1 April 1980, 1980 American Institute of Physics, pp.491-492.

Ce dispositif comprend deux guides parallèles enterrés complètement dans un substrat en niobate de lithium, réalisés par diffusion localisée d'ions titane (Ti).

En surface de l'un des guides et sur une certaine longueur $L_1$, dite longueur de couplage, est réalisée une couche métallique directement sur ledit guide. En surface de l'autre guide est réalisée, sur la même longueur, une seconde couche métallique, mais dans ce cas, une couche diélectrique est interposée entre cette couche métallique et la surface supérieure du guide. Une différence de potentiel peut éventuellement être appliquée entre les deux couches métalliques qui forment alors des électrodes.

Le fonctionnement de ce dispositif est fondé sur les faits suivants :

On sait que, lorsque deux guides sont disposés parallèlement sur une certaine longueur, si l'un des guides transporte un certain mode, ce mode va complètement passer dans le second guide pourvu que la longueur sur laquelle les deux guides sont parallèles corresponde à la longueur de couplage pour ledit mode.

Cette longueur de couplage est liée à l'inverse de la différence des constantes de propagation des modes symétriques et antisymétriques qui peuvent se propager dans cette structure, formant alors un coupleur.

Or, pour chacune des polarisations TE et TM, les constantes de propagation des modes symétrique et antisymétrique sont respectivement pratiquement identiques. Il en résulte que si l'on voulait réaliser la séparation des polarisations TE et TM par un coupleur formé de guides identiques, cela nécessiterait une longueur de couplage presque infinie.

C'est pourquoi, le document cité présente un séparateur des polarisations TE et TM fondé sur une structure dissymétrique, dans laquelle le coupleur est symétrique pour la polarisation TE et dissymétrique pour la polarisation TM, du point de vue des constantes de propagation des polarisations TE et TM pour chaque guide pris individuellement. Cette réalisation est fondée sur les propriétés de la polarisation TM qui diffèrent de celles de la polarisation TE. Il est apparu que lorsque l'on place une couche métallique directement en surface d'un guide de lumière, la constante de propagation de la polarisation TM est fortement modifiée par la présence de cette couche métallique, alors que la constante de propagation de la polarisation TE est peu affectée par cette présence.

D'autre part, on sait que pour que deux guides monomodes soient couplés, il faut que les constantes de propagation du mode fondamental dans chaque guide soient pratiquement identiques dans le guide d'entrée ou premier guide, et dans le guide de sortie ou second guide, dans lequel ledit mode passe par couplage.

Lorsque ces constantes sont identiques, ou pratiquement identiques, pour le mode donné, dans les deux guides, il y a transfert total ou pratiquement total de ce mode d'un guide dans l'autre. Le coupleur est considéré comme symétrique pour ledit mode.

Lorsque ces constantes sont, au contraire, différentes le transfert est seulement partiel, voire nul ; et le coupleur est dit dissymétrique pour ce mode.

Il résulte des propriétés respectives des polarisations TE et TM citées précédemment, que du fait de la présence d'une couche métallique sur le guide de sortie ou second guide, la constante de propagation dans

2

le guide muni de la couche métallique va devenir très différente de la constante de propagation dans le premier guide non muni de la couche métallique pour ce qui concerne la polarisation TM. En revanche, les constantes de propagation dans l'un et l'autre guide vont rester sensiblement identiques en ce qui concerne la polarisation TE.

Il ne pourra donc pas y avoir transfert de la polarisation TM du guide d'entrée ou premier guide vers le guide de sortie ou second guide ; et la polarisation TM restera dans le guide d'entrée où elle continuera à se propager ; alors que ce transfert pourra avoir lieu pour la polarisation TE, qu va donc passer dans le guide de sortie ou second des deux guides parallèles.

Les différences de propriétés entre la polarisation TE et la polarisation TM dans le niobate de lithium sont dues entre autres à un phénomène physique qui apparaît plus particulièrement dans ce matériau. Ce phénomène consiste en l'apparition d'un mode plasma de nature TM, qui montre un indice effectif de propagation beaucoup plus grand que tous les autres indices de la structure et qui dissymétrise le couplage lorsque la couche métallique existe sur le guide d'entrée.

Dans le dispositif connu, la seconde couche métallique est disposée sur une couche diélectrique afin de ne pas influencer le phénomène. Les couches métalliques peuvent ainsi servir d'électrodes afin d'ajuster la longueur de couplage de la polarisation TE à une longueur voulue pour le dispositif.

Mais si le dispositif décrit dans le document cité présente des avantages, notamment du fait que les guides d'entrée et de sortie du séparateur TE/TM sont parallèles, il présente en revanche l'inconvénient d'être réalisé en niobate de lithium qui n'est pas un matériau permettant de réaliser des circuits optoélectroniques en synergie de fabrication avec les circuits intégrés qui leurs sont généralement adjoints.

C'est pourquoi la présente invention a pour but de proposer un séparateur des polarisations TE/TM qui est réalisable et intégrable sur un matériau III-V et qui est en particulier :

- miniaturisé,
- en synergie de fabrication avec les circuits intégrés ultra-rapides ou hyperfréquences,
- intégrable sur le même substrat que ces circuits,
- qui fonctionne à des longueurs d'onde répondant aux standards des télécommunications,
- qui présente des pertes minimales.

Ainsi, un matériau III-V tel que $Ga_xIn_{1-x}As_yP_{1-y}$ dans lequel x et y sont les concentrations, est un matériau particulièrement bien adapté pour atteindre ces buts.

Mais il se trouve que, à ce jour, on ne sait pas dominer, et donc transposer dans les matériaux III-V le phénomène d'apparition du mode plasma qui permet de dissymétriser la structure du séparateur TE/TM à guides parallèles connu de l'état de la technique en niobate de lithium.

Un autre séparateur de polarisations TE/TM est encore connu de l'état de la technique par la publication intitulée "Guided-wave polarization splitter based on two-mode interference" par A. Neyer, D. Dang dans "IGWO-88" conference ME3-1, pp.107-110.

Ce document décrit un dispositif, qui comme le précédent est réalisé en niobate de lithium mais qui repose sur un principe physique différent. Ce dispositif séparateur comprend une partie centrale constituée par un guide de lumière qui a des dimensions transverses suffisamment grandes pour être bimode, c'est-à-dire pour véhiculer à la fois un mode symétrique et un mode antisymétrique. Ce dispositif comprend en outre deux guides d'entrée monomodes qui font entre eux un petit angle, et deux guides de sortie de même structure.

Le signal d'entrée décomposable en TE/TM est transporté par l'un des guides d'entrée dans la partie centrale, où il se produit une première décomposition en la composante symétrique et antisymétrique du guide central pour chaque composante TE et TM.

Le long de la partie centrale, il se produit un battement pour chaque polarisation entre le mode symétrique et le mode antisymétrique. Si la longueur du guide central est telle qu'elle est égale à la longueur de couplage de la polarisation TM, et que cette dernière longueur de couplage elle-même est le double de celle de la polarisation TE, alors le mode symétrique et le mode antisymétrique de la polarisation TM se retrouveront, au bout de la longueur du guide central en opposition de phase par rapport à l'état où ils se trouvaient à l'entrée de la partie centrale ; il en résulte que la polarisation TM pourra sortir par le guide situé du côté opposé au guide d'entrée par rapport à l'axe optique du système. Alors que pour la polaristion TE, les modes symétrique et antisymétrique se retrouveront en phase à l'extrémité de la partie centrale et la polarisation TE sortira par le guide situé du même côté que le guide d'entrée par rapport à l'axe optique.

De ce document, on peut retenir l'enseignement qu'un point de fonctionnement est trouvé en fonction de la largeur de la partie centrale et de l'angle entre les guides, pour une longueur de couplage de la polarisation TE égale à 0,5 fois la longueur de couplage de la polarisation TM.

Un tel dispositif, serait par son principe transposable aux matériaux III-V. Mais il présente de par sa structure des inconvénients. Notamment l'angle entre les guides est assez critique. Si l'angle est petit, l'onde évanescente correspondant à l'une des polarisations destinée à être transportée par l'un des guides de sortie passe dans l'autre guide de sortie et il en résulte que la séparation est imparfaite. Si l'angle est grand, alors la conversion de mode pour passer de la région centrale aux guides de sortie est difficile et il y a des pertes importantes. Donc, d'une façon générale, du fait que les guides font un angle critique entre eux dans ce système séparateur connu, on rencontre des problèmes de diaphonie et d'isolation des deux voies de sortie.

Ces problèmes de structures sont évités et les buts de l'invention cités plus haut sont atteints au moyen d'un dispositif tel que défini à la revendication 1.

Le dispositif selon l'invention présente notamment l'avantage de conserver la structure de guides parallèles, et donc d'éviter la réalisation d'angles critiques, lié à l'avantage d'être réalisable en matériau III-V au moyen d'une technologie de guides à faibles pertes.

L'invention sera mieux comprise au moyen de la description suivante illustrée par les figures schématiques annexées dont :

- la figure 1a qui représente le dispositif séparateur des polarisations TE/TM selon l'invention, vu du dessus,
- la figure 1b qui représente symboliquement le trajet des faisceaux liés à ces polarisations dans ce même dispositif ;
- la figure 2a qui représente ce dispositif, en coupe selon l'axe I-I de la figure 1a dans un premier mode de réalisation ;
- la figure 2b qui représente le même dispositif que celui de la figure 2a, en coupe selon l'axe II-II de la figure 1a ;
- la figure 2c qui représente la courbe de variation du rapport des longueurs de couplage des polarisations TE et TM, $L_c(TE)/L_c(TM)$, en fonction de la distance bord à bord $\underline{d}$ des guides, dans ce mode de réalisation et pour des valeurs préférentielles des différents paramètres de la structure;
- la figure 2d qui montre les courbes isoénergies dans un guide d'une telle structure ;
- la figure 3a qui représente le dispositif selon l'invention, en coupe selon l'axe I-I de la figure 1a, dans un second mode de réalisation ;
- la figure 3b qui représente le même dispositif que celui de la figure 3a, en coupe selon l'axe II-II de la figure 1a ;
- la figure 3c qui représente le courbe de variation du rapport des longueurs de couplage des polarisations TE et TM, $L_c(TE)/L_c(TM)$, en fonction de la distance bord à bord $\underline{d}$ des guides, dans ce second mode de réalisation ;
- la figure 3d qui montre les courbes isoénergies dans un guide d'une telle structure.

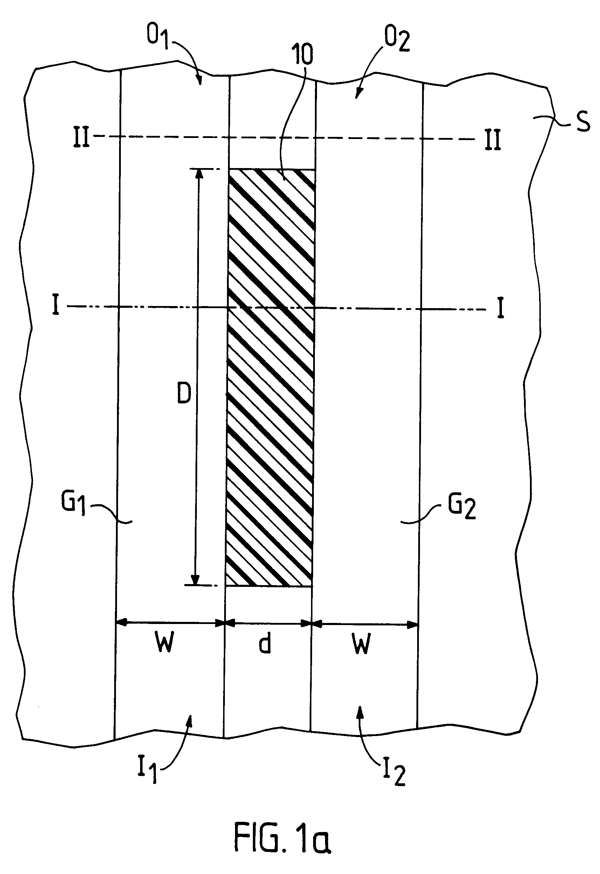

Tel que représenté, schématiquement, vu du dessus sur la figure 1a, le séparateur des polarisations TE/TM selon l'invention, comprend, réalisés sur un substrat $\underline{S}$ en matériau III-V :

- deux guides de lumière parallèles, respectivement $G_1$ et $G_2$, intégrés sur ce substrat $\underline{S}$, de dimension transverse $\underline{W}$, séparés par une distance bord à bord $\underline{d}$, eux-mêmes réalisés en matériau III-V,
- et, disposée entre les deux guides de lumière $G_1$ et $G_2$, une couche métallique 10. Cette couche présente comme dimension transverse $\underline{d}$, identique à la distance qui sépare les guides bord à bord, et comme dimension longitudinale D, dimension dont la valeur sera définie plus loin.

Les dimensions et caractéristiques des guides $G_1$ et $G_2$ sont choisies pour qu'ils soient monomodes, c'est-à-dire que, pour une longueur d'onde donnée, ils transportent le mode fondamental, ou d'ordre 0.

Un faisceau de lumière étant appliqué à l'entrée $I_1$ du guide $G_1$, le but de l'invention est d'obtenir que l'une des composantes TE ou TM soit disponible à la sortie $0_1$ du guide $G_1$ pour continuer à être transportée par ce guide $G_1$, et que l'autre composante soit alors disponible à la sortie $0_2$ du guide $G_2$ pour continuer à être transportée par ce guide $G_2$, ces composantes TE et TM du signal initial étant ainsi séparées.

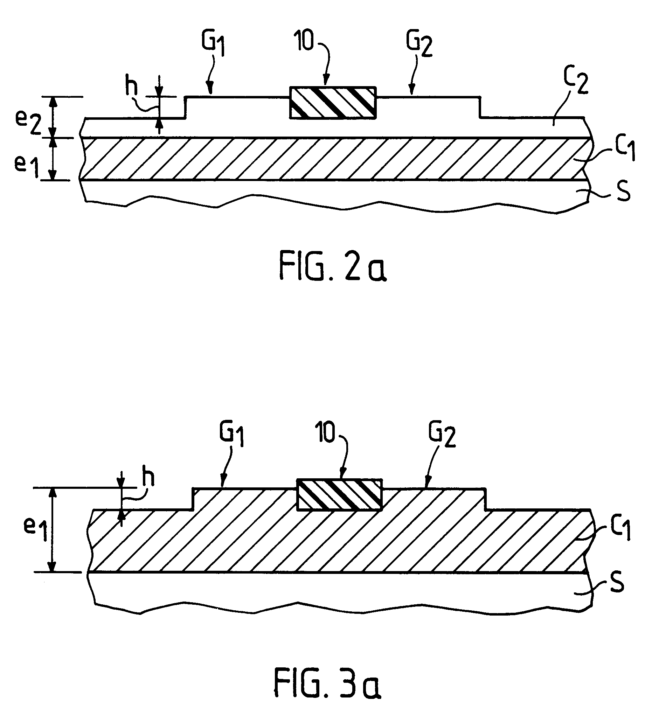

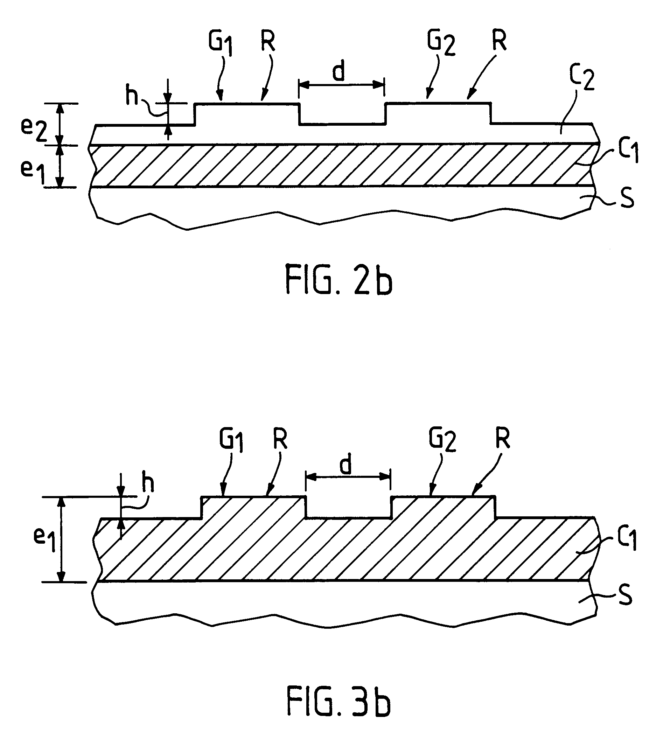

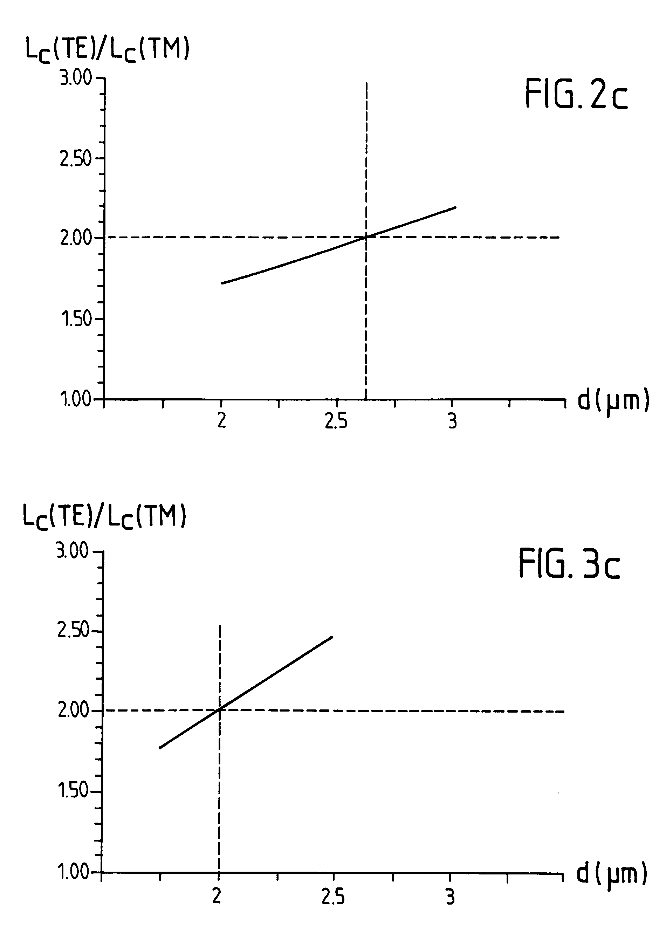

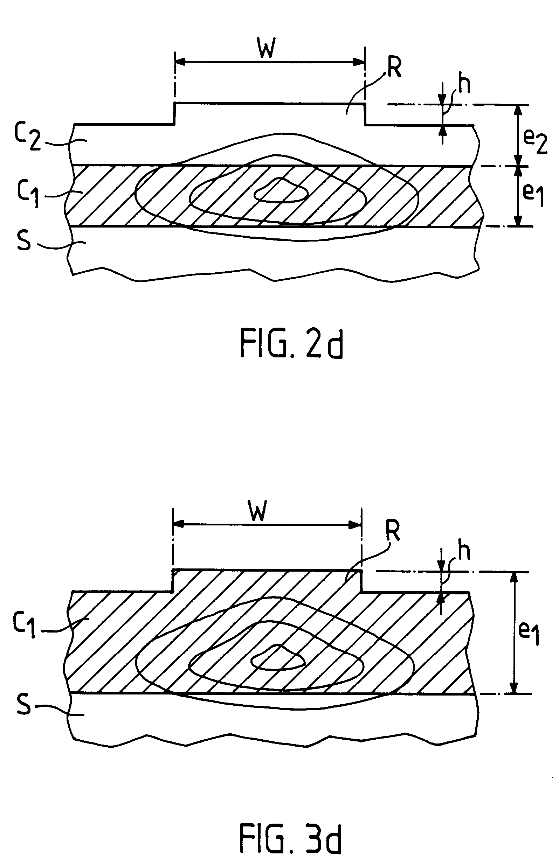

L'ensemble des figures 2, et l'ensemble des figures 3 illustrent chacun une méthode pour réaliser les guides de lumière intégrés sur matériau III-V et aptes à constituer un séparateur de polarisations TE/TM selon l'invention.

Les figures 2a et 2b représentent en coupe, selon l'axe I-I et l'axe II-II de la figure 1a respectivement le dispositif selon l'invention dans le premier mode de réalisation. Les figures 3a et 3b représentent en coupe selon l'axe I-I et l'axe II-II de la figure 1a respectivement le dispositif selon l'invention dans le second mode de réalisation.

Dans l'un et l'autre de ces modes de réalisation, les guides de lumière sont constitués d'une couche guidante $C_1$ surmontée pour chaque guide d'un ruban R, de section rectangulaire, érigé au-dessus du dispositif sur une hauteur $\underline{h}$ faible devant sa dimension transversale $\underline{W}$.

Dans le premier mode de réalisation illustré par l'ensemble des figures 2a, 2b et 2d en coupe, le dispositif est formé d'une double hétérostructure, comprenant un substrat binaire S, une couche guidante $C_1$ quaternaire, et une couche de confinement $C_2$ binaire dans laquelle sont formés les rubans de guidage R.

Dans le second mode de réalisation illustré par l'ensemble des figures 3a, 3b et 3d en coupe, le dispositif est formé d'une simple hétérostructure, comprenant un substrat binaire S, une couche guidante $C_1$ quaternaire, en surface de laquelle sont formés les rubans de guidage R.

Les figures 2d et 3d représentent respectivement en coupe selon l'axe II-II de la figure 1a, un guide, $G_1$ ou $G_2$, dans l'un et dans l'autre des deux modes de réalisation, ainsi que la section du faisceau, symbolisée par les lignes isoénergie. On voit que, en dehors de la région séparatrice, dans chaque guide, le faisceau se propage principalement dans la couche guidante, mais que le rôle du ruban R est cependant essentiel pour le guidage.

Ce type de structure de guide à ruban supérieur est celui qui à ce jour, montre le moins de pertes. Cependant, on doit noter que le système à double hétérostructure correspondant à l'ensemble des figures 2, montre encore moins de pertes que le système à simple hétérostructure correspondant à l'ensemble des figures 3.

Le dispositif séparateur des polarisations TE et TM fonctionne cependant dans l'un et l'autre des modes de réalisation selon le même principe.

Dans l'un et l'autre cas, la couche métallique 10 qui est réalisée entre les guides $G_1$ et $G_2$ dans l'intervalle des rubans R, présente un indice de réfraction complexe, qui est une fonction de la longueur d'onde du faisceau et qui a une influence sur les indices effectifs de propagation des polarisations dans le matériau situé sous la couche métallique.

Selon l'invention, comme on ne peut séparer les polarisations TE et TM, dans l'état actuel des connaissances en technologie III-V, en utilisant l'enseignement du premier document cité au titre d'état de la technique, enseignement fondé sur l'apparition d'un mode plasma, et comme d'autre part, on veut éviter la structure du second document cité, pour les inconvénients qu'elle entraîne, on a été amené à chercher de nouvelles propriétés, différenciant les polarisations TE et TM, et utilisables en technologie III-V.

Il apparaît que, du fait de la disposition de la couche métallique entre les guides $G_1$ et $G_2$ selon l'invention, la <u>partie réelle</u> de l'indice effectif de propagation de la <u>composante TE</u> décroît davantage que ne décroît la <u>partie réelle</u> de l'indice effectif de propagation de la <u>composante TM</u>.

C'est cette propriété que l'on va utiliser pour réaliser le dispositif selon l'invention.

On voit donc ici que le dispositif selon l'invention utilise une toute autre propriété que la propriété qui était utilisée dans le premier document cité, à savoir, en plus de l'effet du mode plasma déjà décrit, le fait que la couche métallique placée en surface du guide de sortie, agissait davantage sur la <u>partie imaginaire</u> de l'indice effectif de propagation de la polarisation TM que sur la partie imaginaire de l'indice effectif de propagation de la polarisation TE. Or la partie imaginaire de l'indice effectif de propagation est liée directement à l'absorption de la composante par la couche métallique. Il en résultait que dans le dispositif connu, la couche métallique agissant sur la <u>partie imaginaire</u> de l'indice effectif de propagation de la polarisation TM, provoquait l'absorption de cette composante par la couche métallique. Dans ces conditions, la polarisation TM ne pouvait pas se propager dans le guide couvert d'une couche métallique, alors que la polarisation TE, qui n'était que très faiblement absorbée, pouvait se propager dans ce guide.

Selon l'invention, on agit donc sur les parties réelles et non sur les parties imaginaires, et dans ce cas, contrairement à l'état de la technique, c'est la polarisation TE qui est la plus affectée.

L'effet sur chacune des polarisations, en tenant compte du fait que cet effet est plus grand sur TE dépend :
- de la structure (simple ou double hétérostructure);
- de l'épaisseur de la couche guidante $C_1$ ;
- de l'épaisseur de la couche de confinement $C_2$ lorsqu'elle existe (cas de la double hétérostructure) ;
- de la dimension transverse W du ruban R des guides $G_1$ et $G_2$ ;
- de la distance bord à bord <u>d</u> des guides ou dimension transverse de la couche métallique ;
- de la hauteur <u>h</u> du ruban R ;
- de l'indice complexe de la couche métallique 10.

Les longueurs de couplage $L_c$ de chacune des polarisations TE ou TM sont liées aux constantes de propagation $\beta_S$ et $\beta_A$ pour les modes symétriques et antisymétriques de chacune de ces polarisations TE, TM par les relations 1 et 2 du tableau I.

Pour la détermination de ces constantes de propagation $\beta$ par le calcul, en fonction de la longueur d'onde de fonctionnement $\lambda_0$ et du profil d'indice de réfraction de la structure étudiée, on lira avec profit l'ouvrage intitulé "Topics in Applied Physics, Vol.7, Integrated Optics, chapter : Theory of dielectric waveguides (H.Kogelnik)", T.TAMIR Editeur.

Ces différents paramètres vont conduire au fait que chacune des composantes TE,TM, d'un signal appliqué à l'entrée $I_1$ du guide $G_1$ par exemple va passer dans l'autre guide $G_2$ au bout de longueurs de couplage $L_c(TM)$ pour la composante TM et $L_c(TE)$ pour la composante TE, différentes.

Comme on l'a mentionné plus haut, c'est la partie réelle de la constante de propagation de la polarisation TE qui se trouve plus affectée que celle de TM, ce résultat est encore applicable aux modes symétrique et antisymétrique dans la région de couplage.

Selon l'invention on pourra obtenir

$$L_c(TE) = 2 L_c(TM)$$

en jouant préférentiellement sur la longueur de couplage TE plutôt que sur celle de TM, puisque les longueurs de couplage dans un telle structure à guides parallèles (coupleur directionnel) dépendent directement de l'inverse des différences des parties réelles des constantes de propagation des modes symétrique et antisymétrique (cf. Tableau I).

En fixant les différents paramètres pour obtenir que la relation $L_c(TE) = 2 L_c(TM)$ soit respectée, on obtient que dans la structure selon l'invention, au bout de la longueur $L_c(TM)$, la composante TM est passée entièrement dans le guide $G_2$, alors que la composante TE est passée seulement partiellement dans le guide $G_2$.

Au bout de la longueur $2 L_c(TM)$, la composante TM est revenue dans le guide d'entrée $G_1$. Le but de l'invention est atteint et les polarisations TE et TM sont séparées du fait que, à ce moment là, la composante TE est entièrement passée dans le guide $G_2$.

Pour maintenir chacune des polarisations séparées, l'extrémité de la couche métallique 10 doit coïncider avec la longueur de couplage $L_c(TE)$, de telle façon que

$$D = L_c(TE) = 2 L_c(TM).$$

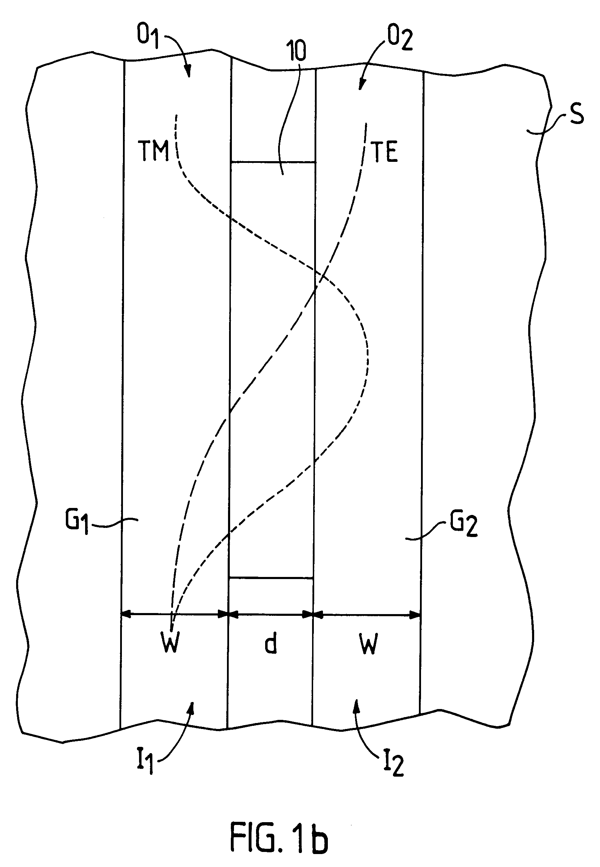

La propagation des polarisations TE et TM se fait alors comme il est représenté symboliquement sur la figure 1b.

On décrira ci-après des exemples de mise en oeuvre des deux types de structures (simple hétérostructure et double hétérostructure) décrites précédemment.

Exemple I = mise en oeuvre d'une double hétérostructure

Dans cette mise en oeuvre illustrée par les figures 2a et 2b en coupe, le dispositif selon l'invention comprend d'abord un substrat S en InP qui peut être soit de type de résistivité $n^+$, soit semi-isolant.

Ce substrat peut être obtenu par tronçonnage d'une plaquette dans un lingot massif d'InP, ce dernier étant lui-même réalisé par la méthode Czochralski par encapsulation liquide par exemple.

Ce dispositif comprend ensuite une couche guidante $C_1$, d'épaisseur $e_1$ en un matériau III-V quaternaire tel que $Ga_x In_{1-x} As_y P_{1-y}$ dans lequel les concentrations x et y sont liées par les relations :

$$y = 0,5$$
$$x = 0,435y.$$

La longueur d'onde associée à l'énergie de bande interdite est de 1,22 μm. Le dispositif conçu selon cet exemple de réalisation est prévu pour fonctionner à la longueur d'onde $\lambda_o = 1,55$ μm correspondant au standard actuel en télécommunications, donc assez loin de la longueur d'onde critique.

Le dispositif comprend ensuite une couche binaire $C_2$ en Inp, d'épaisseur $e_2$, dans laquelle les rubans R de hauteur $\underline{h}$ des guides $G_1$ et $G_2$ sont formés.

La réalisation des couches $C_1$ et $C_2$ sur le substrat $S_1$ peut être faite par croissance épitaxiale selon l'une des méthodes dites MOCVD ou CVD. La réalisation des rubans R, peut être faite au moyen d'une gravure de type dit RIE, à partir de la surface supérieure de la couche de confinement $C_2$, sur une profondeur h.

La couche quaternaire $C_1$ est la couche guidante comme le montre les isoénergies représentées sur la figure 2d. Le choix de l'épaisseur $e_1$ de cette couche $C_1$ est fondé sur les faits que :

- il faut qu'elle soit suffisamment épaisse pour permettre la propagation du mode fondamental (ordre 0),
- il faut qu'elle ne soit pas trop épaisse, pour éviter la propagation des modes d'ordre supérieur.

Ces conditions imposent une épaisseur $e_1$ telle que

$$0,15 \text{ μm} < e_1 < 0,6 \text{ μm}$$

Mais plus $e_1$ est grande et plus la partie évanescente de l'onde qui se propage dans la couche guidante est grande. De plus, si l'épaisseur $e_1$ est importante, l'influence de la couche métallique sur la composante TM diminue.

Ces observations ont amené à considérer que l'épaisseur $e_1$ de la couche $C_1$ est optimale lorsque :

$$e_1 \simeq 0,25 \text{ μm}.$$

De même, pour minimiser les pertes sur la composante TM, tout en ménageant un effet suffisant sur cette composante, on a été amené à considérer l'épaisseur $e_1$-h, qui est la distance entre la couche guidante et la couche métallique 10, comme optimale lorsque :

$$e_2 - h \simeq 0,15 \text{ μm}.$$

On a vu précédemment que tous les paramètres de la structure séparatrice des polarisations TE/TM avaient une influence sur la détermination des longueurs de couplage $L_c(TE)$ et $L_c(TM)$, c'est pourquoi tous ces paramètres optimisés ont été rassemblés dans le tableau II à la ligne $\underline{A}$.

Dans ces conditions la courbe de la figure 2c, qui donne le rapport des longueurs de couplage $L_c(TE)$ à

$L_c(TM)$ en fonction de la distance d indique que la condition recherchée

$$L_c(TE) = 2 L_c(TM)$$

est remplie pour une distance bord à bord des guides

$$d \simeq 2,65 \ \mu m$$

c'est-à-dire $2,5 \ \mu m < d < 2,75 \ \mu m$

La longueur de couplage pour la composante TE

$$L_c(TE) \simeq 3600 \ \mu m$$

La longueur de couplage pour la composante TM

$$L_c(TM) \simeq 1800 \ \mu m$$

Ceci conduit à adopter une longueur D de la couche métallique réalisée sur le dispositif :

$$D = L_c(TE) = 3600 \ \mu m.$$

Ces résultats ont été obtenus en choisissant pour réaliser la couche métallique, une couche d'or déposée par exemple par évaporation sous vide. Cette couche d'or aura de préférence une épaisseur de 0,2 à 0,3 $\mu m$.

L'or a un indice complexe qui s'écrit :

$$n_m = 0,14 + i \times 8,52$$

à la longueur d'onde de 1,55 $\mu m$ qui est la longueur d'onde $\lambda_0$ de fonctionnement. D'autres métaux peuvent être utilisés s'il montrent une partie réelle d'indice qui ne soit pas trop grande.

Pour montrer que les performances du dispositif dépendant des différents paramètres cités, ne peuvent être optimisées que si ces paramètres sont également optimisés, la ligne B du tableau II, donnent les longueurs de couplage $L_c(TE)$ et $L_c(TM)$ remplissant la condition $L_c(TE) = 2 L_c(TM)$ dans le cas où la couche guidante $C_1$ est rendue plus épaisse ($e_1 \simeq 0,4 \ \mu m$) et la couche de confinement plus mince ($e_2 \simeq 0,1 \simeq h$). On constate que dans ces conditions les dimensions du dispositif sont très augmentées car D devra atteindre

$$D \simeq 15.000 \ \mu m$$

## Exemple II = mise en oeuvre d'une simple hétérostructure

Dans cet exemple, le substrat S, et la couche $C_1$ peuvent être réalisés exactement avec la même technologie et les mêmes matériaux que dans l'exemple I.

La couche de confinement $C_2$ n'existe pas ($e_2 = 0$) et les rubans R sont gravés par exemple par RIE directement dans la couche quaternaire $C_1$. La figure 3d montre les lignes isoénergie dans un guide ayant une telle structure.

La ligne C du tableau II donne les longueurs de couplage $L_c(TE)$ et $L_c(TM)$ en fonction des différents paramètres optimisés pour remplir la condition imposée entre les longueurs de couplage.

La courbe de la figure 3e montre que la condition est remplie pour $d \simeq 2,45 \ \mu m$, c'est-à-dire

$$2,25 \ \mu m < d < 2,5$$

Il en résulte que D doit être choisi tel que :

$$D \simeq 9800 \ \mu m \simeq L_c (TE)$$

avec

$$L_c(TM) \simeq 4900 \ \mu m$$

le choix de la mise en oeuvre de l'un ou l'autre de ces exemples de réalisation, en considérant que l'on a déjà choisi les conditions optimales dans chaque cas, sera donc fondé sur les observations que :

- l'hétérostructure double est plus complexe à mettre en oeuvre, mais elle offre les avantages d'une dimension plus petite (3600 $\mu m$ devant 9800 $\mu m$) donc plus facilement intégrable, et de pertes beaucoup moins grandes.

- l'hétéostructure simple est plus facile à mettre en oeuvre, elle ne présente pas d'épaisseur critique à réaliser en épitaxie, mais en revanche, ses dimensions sont plus grandes, elle est moins facilement intégrable et les pertes sont plus importantes.

Un procédé de réalisation pour les croissances de couches et les gravures de couches de matériaux III-V peut être appris par exemple des demandes de brevet français FR-A-2 633 401 et FR-A-2 633 451.

**TABLEAU I**

$$L_C(TE) = \pi/(\beta_S^{TE} - \beta_A^{TE}) \quad (1)$$

$$L_C(TM) = \pi/(\beta_S^{TM} - \beta_A^{TM}) \quad (2)$$

**TABLEAU II**

|   | $\dfrac{L_C(TE)}{L_C(TM)}$ | $L_C(TM)$ (µm) | $L_C(TE)$ (µm) | d (µm) | w (µm) | $e_1$ (µm) | h (µm) | $e_2$ (µm) | y |
|---|---|---|---|---|---|---|---|---|---|
| A | 2 | 1800 | 3600 | 2,65 | 3 | 0,25 | 0,10 | 0,25 | 0,5 |
| B | 2 | 7500 | 15000 | 2,45 | 3 | 0,4 | 0,1 | 0,1 | 0,5 |
| C | 2 | 4900 | 9800 | 2 | 3 | 0,5 | 0,1 | 0 | 0,5 |

**Revendications**

1. Dispositif optoélectronique intégré incluant un séparateur des polarisations TE/TM, ce séparateur comprenant deux guides de lumière monomodes (G1, G2) identiques quant à leur indice de refraction effectif, disposés parallèlement l'un à l'autre et à une distance bord à bord "d" l'un de l'autre suffisamment faible pour former un coupleur, l'un desdits guides étant destiné à recevoir en entrée un signal lumineux; et des moyens, constitués par une couche métallique (10), pour effectuer la séparation de ce signal en ses deux composantes TE et TM, dont l'une TE est transportée en sortie par l'un des guides et l'autre TM est transportée en sortie par l'autre guide, caractérisé en ce que:

    - les deux guides sont formés d'au moins une hétérostructure substrat semiconducteur / couche guidante semiconductrice (S/C1) et de deux rubans de guidage semiconducteurs (R) érigés en surface de l'hétérostructure, parallèlement l'un à l'autre et à une distance bord à bord l'un de l'autre égale à ladite distance "d", et,

    - ladite couche métallique constituant lesdits moyens pour effectuer la séparation des composantes TE et TM est disposée de façon à s'étendre entre les rubans de guidage (R) en surface de la structure, ladite couche (10) étant ainsi apte à permettre une réduction de la partie réelle de l'indice effectif de propagation qui soit plus importante pour la composante TE que pour la composante TM, et donc à donner lieu à une longueur de couplage Lc qui soit plus élevée pour la composante TE que pour la composante TM, les paramètres des grandeurs physiques du dispositif étant par ailleurs choisis pour que la relation:

$$Lc(TE) = 2 Lc(TM)$$

soit vérifiée, de façon à permettre, au bout de la longueur 2Lc(TM), respectivement, le retour de la composante TM dans le guide recepteur du signal incident et le passage complet de la composante TE dans l'autre guide, et donc la séparation desdites composantes, et la longueur "D" sur laquelle s'étend ladite couche métallique (10) étant en outre choisie pour que la relation:

$$D = Lc(TE)$$

soit vérifiée, de façon à permettre le maintien de la séparation ainsi réalisée entre lesdites composantes TE et TM.

2. Dispositif selon la revendication 1, caractérisé en ce que les guides sont formés d'une double hétérostructure substrat semiconducteur/couche guidante semiconductrice/couche de confinement semiconductrice ($S/C_1/C_2$).

3. Dispositif selon les revendications 1 ou 2, caractérisé en ce que l'(les) hétérostructure(s) comprend(ent) une couche quaternaire de composé III-V pour former la couche guidante $C_1$ d'épaisseur $e_1$, et une (des) couche(s) binaire(s) de composé III-V pour former la (les) couche(s) de confinement ($S$, $C_2$).

4. Dispositif selon la revendication 3, caractérisé en ce que le composé quaternaire présente la formule générale $Ga_xIn_{1-x}As_yP_{1-y}$ dans laquelle x et y sont des concentrations, et en ce que le composé binaire est InP.

5. Dispositif selon la revendication 4, caractérisé en ce que la concentration y = 0,5 et x = 0,435 y.

6. Dispositif selon la revendication 5, caractérisé en ce que la couche métallique est une couche d'or (Au) d'épaisseur $e_m$.

7. Dispositif selon l'une des revendications 5 ou 6, caractérisé en ce que dans la simple hétérostructure la hauteur $\underline{h}$ des rubans R est d'épaisseur faible devant celle de la couche quaternaire $C_1$ dans laquelle ces rubans sont formés.

8. Dispositif selon la revendication 7, caractérisé en ce que, pour obtenir que la condition

$$D = L_c(TE) = 2 L_c(TM)$$

soit vérifiée, à la longueur d'onde de fonctionnement

$$\lambda_0 = 1,55 \ \mu m,$$

les paramètres de la structure ont les valeurs suivantes:

| | |
|---|---|
| $e_1 = 0,50 \ \mu m$ | $h = 0,1 \ \mu m$ |
| $e_2 = 0$ | $W = 3 \ \mu m$ |
| $2,25 \ \mu m < d < 2,5 \ \mu m$ | $D \simeq 9800 \ \mu m$ |
| $e_m \simeq 0,2 \ à \ 0,3 \ \mu m$ | |

W étant la dimension transversale des deux rubans R.

9. Dispositif selon l'une des revendications 5 ou 6, caractérisé en ce que dans la double hétérostructure, la couche supérieure de confinement $C_2$ en matériau binaire est d'épaisseur $e_2$ à peu près équivalente à l'épaisseur $e_1$ de la couche guidante $C_1$ en matériau quaternaire, et en ce que la hauteur h des rubans R formés dans la couche supérieure $C_2$ de confinement est inférieure à la moitié de l'épaisseur $e_2$ de cette couche de confinement $C_2$.

10. Dispositif selon la revendication 9, caractérisé en ce que pour obtenir que la condition :

$$D = L_c(TE) = 2 L_c(TM)$$

soit vérifiée, à la longueur d'onde de fonctionnement

$$\lambda_0 = 1,55 \ \mu m,$$

les paramètres de la structure ont les valeurs suivantes :

| | |
|---|---|
| $e_1 = 0,25 \ \mu m$ | $h = 0,1 \ \mu m$ |
| $e_2 = 0,25 \ \mu m$ | $W = 3 \ \mu m$ |

2,5 μm < d < 2,75 μm          D ≃ 3600 μm

$e_m$ ≃ 0,2 à 0,3 μm

W étant la dimension transversale des deux rubans R.

**11.** Procédé de réalisation d'un dispositif selon l'une des revendications précédentes, comprenant au moins les étapes suivantes:

a) formation d'un substrat (S) en phosphure d'indium InP, semi-isolant ou de type de conductivité $n^+$, par exemple sous la forme d'une plaquette obtenue par le tronçonnage d'un lingot massif d'InP, lui-même obtenu par tirage par la méthode Czochralski par encapsulation liquide,

b) formation, sur le substrat (S), d'une couche (C1) de formule GaxIn(1-x)AsyP(1-y), dans laquelle x et y sont les concentrations telles que y=0,5 et x=0,435 y, par une méthode de croissance épitaxiale par exemple du type MOCVD ou CVD sur une épaisseur e1=0,5 micromètre,

c) gravure par une méthode telle que par exemple RIE de la couche épitaxiale (1), sur une profondeur h=0,1 micromètre, pour obtenir en relief sur cette dernière deux rubans (R) de dimension transversale w=3 micromètres, parallèles, séparés par une distance bord à bord d comprise entre 2,25 et 2,5 micromètres et de hauteur h, et

d) dépôt, par exemple par évaporation sous vide, d'une couche d'or (10) disposée entre les rubans (R), sur une longueur D=9800 micromètres et une épaisseur em de 0,2 à 0,3 micromètres.

**12.** Procédé de réalisation d'un dispositif selon l'une des revendications précédentes, comprenant au moins les étapes suivantes:

a) formation d'un substrat (S) en phosphure d'indium InP, semi-isolant ou de type de conductivité $n^+$, par exemple sous la forme d'une plaquette obtenue par le tronçonnage d'un lingot massif d'InP, lui-même obtenu par tirage par la méthode Czochralski par encapsulation liquide,

b1) formations, sur le substrat (S), d'une couche (C1) de formule CaxIn(1-x)AsyP(1-y), dans laquelle x et y sont les concentrations telles que y=0,5 et x=0,435 y, par une méthode de croissance épitaxiale, par exemple du type MOCVD ou CVD, sur une épaisseur e1=0,25 micromètre,

b2) formation, sur la première couche (C1), d'une seconde couche (C2) de formule InP par une méthode de croissance épitaxiale, par exemple du type MOCVD ou CVD, sur une épaisseur e2=0,25 micromètre,

c) gravure par une méthode telle que par exemple RIE de la couche épitaxiale supérieure, sur une profondeur h=0,1 micromètre, pour obtenir en relief sur cette dernière deux rubans (R) de dimension transversale w=3 micromètres, parallèles, séparés par une distance bord à bord d comprise entre 2,50 et 2,75 micromètres, et de hauteur h, et

d) dépôt, par exemple par évaporation sous vide, d'une couche d'or (10), disposée entre les rubans (R) sur une longueur D = 3600 micromètres et une épaisseur em de 0,2 à 0,3 micromètres.

**Patentansprüche**

**1.** Integrierte opto-elektronische Vorrichtung mit einem TE/TM-Polarisationsseparator, der zwei bezüglich ihres effektiven Brechungsindex identischen Monomode-Lichtleiter (G1, G2) enthält, die parallel zueinander mit einem gegenseitigen Abstand d ihrer Ränder verlaufen, der ausreichend gering ist, um einen Koppler zu bilden, wobei einer dieser Lichtleiter am Eingang ein Lichtsignal zugeführt erhalten kann, und wobei der Separator weiter Mittel in Form einer Metallschicht (10) enthält, um die Aufteilung dieses Signals in seine beiden Komponenten TE und TM durchzuführen, wobei die Komponente TE ausgangsseitig von einem der Lichtleiter und die Komponente TM ausgangsseitig vom anderen Lichtleiter geführt wird, dadurch gekennzeichnet, daß

- die beiden Lichtleiter aus mindestens einer Heterostruktur mit einem Halbleitersubstrat (S) und einer lichtleitenden Halbleiterschicht (C1) und aus zwei Halbleiter-Führungsbändern (R) gebildet werden, die auf der Oberfläche der Heterostruktur errichtet sind, parallel zueinander verlaufen und einen Randabstand voneinander haben, der gleich dem Abstand d ist,

- und die Metallschicht, die die Mittel zur Durchführung der Aufteilung der Komponenten TE und TM bildet, so angeordnet ist, daß sie sich zwischen den Führungsbändern R an der Oberfläche der Struktur erstreckt, so daß diese Schicht (10) eine Reduzierung des reellen Teils des effektiven Fortpflanzungsindex ermöglichen kann, die deutlicher für die Komponente TE als für die Komponente TM ist, so daß sich eine größere Kopplungslänge Lc für die Komponente TE als für die Komponente TM ergibt, wobei die Parameter der physikalischen Größen der Vorrichtung im übrigen so gewählt sind, daß die folgende

Gleichung erfüllt ist:

$$Lc(TE) = 2\,Lc(TM)$$

so daß am Ende der Länge 2Lc(TM) die Komponente TM in den Lichtleiter zurückgekehrt ist, der das Eingangssignal empfing, während die Komponente TE ganz in den anderen Lichtleiter übergegangen ist, wodurch sich die Aufteilung der Komponenten ergibt, und wobei die Länge "D", über die sich die Metallschicht (10) erstreckt, gemäß folgender Definition gewählt ist:

$$D = Lc(TE)$$

so daß die erfolgte Aufteilung zwischen den beiden Komponenten TE und TM erhalten bleibt.

2. Vorrichtung nach Anspruch 1, dadurch gekennzeichnet, daß die Lichtleiter von einer doppelten Heterostruktur Halbleitersubstrat/halbleitende Lichtleiterschicht/halbleitende Einschließungsschicht ($S/C_1/C_2$) gebildet werden.

3. Vorrichtung nach Anspruch 1, oder 2, dadurch gekennzeichnet, daß die Heterostruktur(en) eine quaternäre Schicht eines Stoffs III-V enthält (enthalten), um die lichtleitende Schicht $C_1$ der Dicke $e_1$ zu bilden, sowie eine binäre Schicht oder binäre Schichten eines Stoffs III-V, um die Einschließungsschicht(en) zu bilden ($S,C_2$).

4. Vorrichtung nach Anspruch 3, dadurch gekennzeichnet, daß der quaternäre Stoff die allgemeine Formel $Ga_xIn_{1-x}As_yP_{1-y}$ besitzt, in der x und y Konzentrationen sind, und daß der binäre Stoff InP ist.

5. Vorrichtung nach Anspruch 4, dadurch gekennzeichnet, daß folgende Konzentrationen gewählt werden:
y = 0,5 x = 0,435 y.

6. Vorrichtung nach Anspruch 5, dadurch gekennzeichnet, daß die Metallschicht eine Goldschicht (Au) einer Dicke $e_m$ ist.

7. Vorrichtung nach einem der Ansprüche 5 oder 6, dadurch gekennzeichnet, daß in der einfachen Heterostruktur die Höhe h der Bänder R gering gegenüber der der quaternären Schicht $C_1$ ist, in der diese Bänder ausgebildet sind.

8. Vorrichtung nach Anspruch 7, dadurch gekennzeichnet, daß für die Einhaltung der Bedingung

$$D = L_c(TE) = 2\,L_2(TM)$$

bei der Betriebswellenlänge $\lambda_o$ = 1,55 µm die Parameter der Struktur folgende Werte annehmen:
$e_1$ = 0,50 µm           h = 0,1 µm
$e_2$ = 0               W = 3µm
2,25 µm < d < 2,5 µm      D = 9800 µm
$e_m$ = 0,2 bis 0,3 µm
wobei W die Querabmessung der beiden Bänder R bedeutet.

9. Vorrichtung nach einem der Ansprüche 5 oder 6, dadurch gekennzeichnet, daß in der doppelten Heterostruktur die obere Einschließungsschicht $C_2$ aus einem binären Material eine Dicke $e_2$ besitzt, die etwa der Dicke $e_1$ der lichtleitenden Schicht $C_1$ aus quaternärem Material äquivalent ist, und daß die Höhe h der Bänder R, die in der oberen Einschließungsschicht $C_2$ ausgebildet sind, geringer als die Hälfte der Dicke $e_2$ dieser Einschließungsschicht $C_2$ ist.

10. Vorrichtung nach Anspruch 9, dadurch gekennzeichnet, daß für die Einhaltung der Bedingung

$$D = L_c(TE) = 2\,L_2(TM)$$

bei der Betriebswellenlänge $\lambda_o$ = 1,55 µm die Parameter der Struktur folgende Werte annehmen:
$e_1$ = 0,25 µm           h = 0,1 µm
$e_2$ = 0,25 µm          W = 3 µm
2,5 µm < d < 2,75 µm      D = 3600 µm
$e_m$ = 0,2 bis 0,3 µm
wobei W die Querabmessung der beiden Bänder R bedeutet.

11. Verfahren zur Herstellung einer Vorrichtung nach einem der vorhergehenden Ansprüche, das mindestens die folgenden Verfahrensschritte aufweist:
a) Bildung eines halbisolierenden Substrats (S) oder eines Substrats (S) vom Leitfähigkeitstyp $n^+$ aus Indiumphosphid InP, beispielsweise in Form eines Plättchens, das durch Zerschneiden eines massiven Blocks aus InP erhalten wird, der seinerseits nach der Methode von Czochralski durch flüssige Einkapselung gezogen wurde,

b) Bildung einer Schicht (C1) der Formel $Ga_xIn_{1-x}As_yP_{1-y}$ auf dem Substrat (S), wobei x und y Konzentrationen mit den Werten y = 0,5 und x = 0,435 y sind, gemäß einer Methode des epitaxialen Wachstums, beispielsweise vom Typ MOCVD oder CVD über eine Dicke $e_1$ von 0,5 μm,

c) Ätzen der epitaxialen Schicht ($C_1$), beispielsweise mit Hilfe der Methode RIE, über eine Dicke h von 0,1 μm, um in Reliefform auf dieser Schicht zwei Bänder R einer Querabmessung W = 3 μm zu erhalten, die parallel verlaufen und einen Randabstand d zwischen 2,25 und 2,5 μm besitzen, sowie eine Höhe h, und

d) Aufbringen einer Goldschicht (10), beispielsweise durch Verdampfung im Vakuum, die zwischen den Bändern (R) liegt und sich über eine Länge D = 9800 μm erstreckt und eine Dicke $e_m$ von 0,2 bis 0,3 μm besitzt.

**12.** Verfahren zur Herstellung einer Vorrichtung nach einem der vorhergehenden Ansprüche, das mindestens die folgenden Verfahrensschritte aufweist:

a) Bildung eines halbisolierenden Substrats (S) oder eines Substrats (S) vom Leitfähigkeitstyp $n^+$ aus Indiumphosphid InP, beispielsweise in Form eines Plättchens, das durch Zerschneiden eines massiven Blocks aus InP erhalten wird, der seinerseits nach der Methode von Czochralski durch flüssige Einkapselung gezogen wurde,

b1) Bildung einer ersten Schicht (C1) der Formel $Ga_xIn_{1-x}As_yP_{1-y}$ auf dem Substrat (S), wobei x und y Konzentrationen mit den Werten y = 0,5 und x = 0,435 y sind, gemäß einer Methode des epitaxialen Wachstums, beispielsweise vom Typ MOCVD oder CVD über eine Dicke $e_1$ von 0,25 μm,

b2) Bildung einer zweiten Schicht (C2) der Formel InP auf der ersten Schicht (C1) durch eine Methode des epitaxialen Wachstums, beispielsweise vom Typ MOCVD oder CVD über eine Dicke $e_2$ von 0,25 μm,

c) Ätzen der epitaxialen Schicht ($C_1$), beispielsweise mit Hilfe der Methode RIE, über eine Dicke h von 0,1 μm, um in Reliefform auf dieser Schicht zwei Bänder R einer Querabmessung W = 3 μm zu erhalten, die parallel verlaufen und einen Randabstand d zwischen 2,5 und 2,75 μm besitzen, sowie eine Höhe h, und

d) Aufbringen einer Goldschicht (10), beispielsweise durch Verdampfung im Vakuum, die zwischen den Bindern (R) liegt und sich über eine Länge D = 3600 μm erstreckt und eine Dicke $e_m$ von 0,2 bis 0,3 μm besitzt.

## Claims

1. Integrated optoelectronic device including a TE/TM mode splitter comprising two monomode optical waveguides ($G_1$, $G_2$) having exactly the same effective refractive index disposed parallel to each other and at an edge to edge distance "d" from each other sufficiently small to form a coupler, one of said guides being adapted to receive at its input a light signal; and means constituted by a metal layer (10) for splitting said signal into its TE and TM components, the TE component being conveyed to the output by one of the guides and the TM component being conveyed to the output by the other guide, characterised in that:

- both guides are formed of at least one semiconductor substrate/semiconductor guide layer (S/C1) heterostructure and two semiconductor guide ribbons (R) disposed on the surface of the heterostructure parallel to each other and at an edge to edge distance from each other equal to said distance "d", and

- said metal layer constituting said means for splitting the TE and TM components is disposed between the guide ribbons (R) on the surface of the structure, said layer (10) thereby being adapted to reduce the real part of the effective index of propagation which is greater for the TE component than for the TM component and so to produce a coupling length Lc which is higher for the TE component than for the TM component, the parameters of the physical magnitudes of the device being further chosen to satisfy the equation:

$$Lc(TE) = 2 Lc(TM)$$

to enable, at the end of the length 2Lc(TM), the TM component to return to the guide receiving the incident signal and all of the TE component to pass into the other guide and therefore splitting of said components, the length "D" over which said metal layer (10) extends being further chosen to satisfy the equation:

$$D = Lc(TE)$$

to enable the resulting splitting of said TE and TM components to be maintained.

**2.** Device according to claim 1 characterised in that the guides are formed of a semiconductor substrate/semiconductor guide layer/semiconductor confinement layer ($S/C_1/C_2$) double heterostructure.

**3.** Device according to claim 1 or claim 2 characterised in that the heterostructure(s) comprise(s) a III-V quaternary layer to form the guide layer $C_1$ of thickness $e_1$ and III-V binary layer(s) to form the confinement layer(s) ($S, C_2$).

**4.** Device according to claim 3 characterised in that the quaternary substance has the general formula $Ga_{x-}In_{1-x}As_yP_{1-y}$ in which $\underline{x}$ and $\underline{y}$ are concentrations and the binary substance is InP.

**5.** Device according to claim 4 characterised in that the concentration $y = 0.5$ and $x = 0.435\ y$.

**6.** Device according to claim 5 characterised in that the metal layer is a layer of gold (Au) $e_m$ thick.

**7.** Device according to claim 5 or claim 6 characterised that in the single heterostructure the height $\underline{h}$ of the ribbons R is small in comparison with that of the quaternary layer $C_1$ in which the ribbons are formed.

**8.** Device according to claim 7 characterised in that, to satisfy the condition:
$$D = L_c(TE) = 2\,L_c(TM)$$
at the operating wavelength:
$$\lambda_0 = 1.55\ \mu m$$
the parameters of the structure have the following values:

$e_1 = 0.50\ \mu m$      $h = 0.1\ \mu m$

$e_2 = 0$      $W = 3\ \mu m$

$2.25\ \mu m < d < 2.5\ \mu m$      $D = 9\ 800\ \mu m$

$e_m = 0.2 - 0.3\ \mu m$

W being the transverse dimension of the two ribbons R.

**9.** Device according to claim 5 or claim 6 characterised in that in the double heterostructure the upper confinement layer $C_2$ of binary material has a thickness $e_2$ substantially equal to the thickness $e_1$ of the guide layer $C_2$ of quaternary material and in that the height $\underline{h}$ of the ribbons R formed in the upper confinement layer $C_2$ is less than half the thickness $e_2$ of this confinement layer $C_2$.

**10.** Device according to claim 9 characterised in that, to satisfy the condition:
$$D = L_c(TE) = 2\,L_c(TM)$$
at the operating wavelength:
$$\lambda_0 = 1.55\ \mu m$$
the parameters of the structure have the following values:

$e_1 = 0.25\ \mu m$      $h = 0.1\ \mu m$

$e_2 = 0.25\ \mu m$      $W = 3\ \mu m$

$2.5\ \mu m < d < 2.75\ \mu m$      $D = 3600\ \mu m$

$e_m = 0.2 - 0.3\ \mu m$

W being the transverse dimension of the two ribbons R.

**11.** Method of implementing a device according to any one of the preceding claims comprising at least the following stages:

a) forming a semi-insulative or $n^+$ conductivity type indium phosphide InP substrate (S) for example in the form of a plate cut from an InP ingot produced by the Czochralski liquid encapsulation method,

b) forming on the substrate (S) a layer (C1) of formula GaxIn (1-x)AsyP (1-y) in which x and y are the concentrations such that $y = 0.5$ and $x = 0.435\ y$ by an MOCVD or CVD epitaxial growth method for example to a thickness e1 = 0.5 micrometer,

c) etching by a method such as the RIE method, for example, the epitaxial layer (C1) to a depth h = 0.1 micrometer to obtain on the latter two parallel upstanding ribbons (R) of transverse dimension w = 3 micrometers separated by an edge to edge distance $\underline{d}$ between 2.25 and 2.5 micrometers and of height $\underline{h}$, and

d) depositing, for example by evaporation in vacuum a layer of gold (10) between the ribbons (R) over a length D = 9 800 micrometers and to a thickness em of 0.2 to 0.3 micrometers.

**12.** Method of implementing a device according to any one of the preceding claims comprising at least the following stages:

a) forming a semi-insulative or $n^+$ conductivity type indium phosphide InP substrate (S) for example in the form of a plate cut from an InP ingot produced by the Czochralski liquid encapsulation method,

b1) forming on the substrate (S) a layer (C1) of formula $Ga_xIn_{(1-x)}As_yP_{(1-y)}$ in which $\underline{x}$ and $\underline{y}$ are the concentrations such that $y = 0.5$ and $x = 0.435 \, y$ by an MOCVD or CVD epitaxial growth method for example to a thickness $e1 = 0.5$ micrometer,

b2) forming on the first layer (C1) an InP second layer (C2) by an MOCVD or CVD epitaxial growth method for example to a thickness $e2 = 0.25$ micrometer,

c) etching by a method such as the RIE method, for example, the epitaxial layer (C1) to a depth $h = 0.1$ micrometer to obtain on the latter two parallel upstanding ribbons (R) of transverse dimension $w = 3$ micrometers separated by an edge to edge distance $\underline{d}$ between 2.50 and 2.75 micrometers and of height $\underline{h}$, and

d) depositing, for example by evaporation in vacuum a layer of gold (10) between the ribbons (R) over a length $D = 3\,600$ micrometers and to a thickness $em$ of 0.2 to 0.3 micrometers.

FIG. 1a

FIG. 1b

FIG. 2a

FIG. 3a

FIG. 2b

FIG. 3b

$L_C(TE)/L_C(TM)$

FIG.2c

$L_C(TE)/L_C(TM)$

FIG.3c

FIG. 2d

FIG. 3d